# EUROPÄISCHE PATENTSCHRIFT

(11) **EP 1 941 477 B1**
(45) Veröffentlichungstag und Bekanntmachung des Hinweises auf die Patenterteilung: **16.12.2009**
(21) Anmeldenummer: 06806926.9
(22) Anmeldetag: 02.10.2006
(51) Int. Cl.: G08B 13/184

(54) **HOCHFREQUENZÜBERWACHUNGSSYSTEM**
HIGH-FREQUENCY MONITORING SYSTEM
SYSTEME DE SURVEILLANCE HAUTE FREQUENCE

(30) Priorität: 06.10.2005 DE 102005047923
(43) Veröffentlichungstag der Anmeldung: 09.07.2008
(73) Patentinhaber: ROBERT BOSCH GMBH, 70442 Stuttgart (DE)
(72) Erfinder: MAHLER, Michael, 70771 Leinfelden-Echterdingen (DE); KRAPF, Reiner, 72770 Reutlingen (DE)
(86) Internationale Anmeldenummer: PCT/EP2006/066967
(87) Internationale Veröffentlichungsnummer: WO 2007/039595

(56) Entgegenhaltungen:
- DE-A1- 4 001 952
- GB-A- 715 444
- GB-A- 984 398
- US-A- 4 132 988
- US-A1- 2004 104 822

## Beschreibung

### Stand der Technik

Es ist bekannt, zur Überwachung von Strecken, Flächen oder Räumen gegen das Eindringen von Personen, Fremdkörpern oder Körperteilen Infrarotdetektoren, Lichtschranken oder Radarsensoren zu verwenden. Je nach Art des Überwachungsgeräts werden eine oder mehrere Überwachungssignale in eine oder mehrere Richtungen ausgesandt und die Antwort wird ausgewertet. Im Bereich der Werkzeugtechnik ist es aus der DE 102 61 791 A1 bekannt, den nahen Umraum eines Kreissägeblatts mit Hilfe eines Radarsensors zu überwachen und das Sägeblatt abzuschalten, wenn ein Bediener in die Nähe des Sägeblatts kommt. Zur Überwachung von großen Arealen oder mehreren Räumen werden meist mehrere Sensoren verwendet. Dokument US 4,132,988 beschreibt ein Mochfrequenzüberwachungssystem, bei dem Strahlumlenkmittel verwendet werden.

### Vorteile der Erfindung

Die Erfindung geht aus von einem Hochfrequenzüberwachungssystem mit einer Sendeeinheit zum Aussenden und einer Empfangseinheit zum Empfangen eines hochfrequenten Überwachungsstrahls.

Es wird vorgeschlagen, dass das Hochfrequenzüberwachungssystem ein um zumindest eine Überwachungsstrecke von der Sendeeinheit und der Empfangseinheit entfernt angeordnetes Strahlumlenkmittel zum Umlenken des Überwachungsstrahls aufweist. Hierdurch können mehrere Räume oder verwinkelte Strecken mit einer einzigen Sendeeinheit und insbesondere mit einer einzigen Empfangseinheit überwacht werden, wobei nicht auf die Vorteile der Hochfrequenzüberwachung im Gegensatz zur Infrarotüberwachung oder Laserüberwachung verzichtet werden muss. Zur Außenüberwachung reicht beispielsweise ein einziger Sensor, der durch - zweckmäßigerweise mehrere - Strahlumlenkmittel das gesamte Gebäude von außen überwachen kann. Hierdurch kann ein netzwerkartiges Verbinden von mehreren Sensoren mit einer Auswertezentrale vermieden werden. Ein Vorteil der Hochfrequenz liegt darin, dass ein Hochfrequenzüberwachungssignal nur mit großem Aufwand für eine eindringende Person detektierbar ist. Zusätzlich können eine Sendeeinheit und eine Empfangseinheit hinter anderen Materialien verborgen und so für Unbefugte unsichtbar gehalten werden, da Hochfrequenzstrahlung viele Materialien im Wesentlichen ungehindert passiert.

Als Sendeeinheit zur Aussendung hochfrequenter Strahlung wird eine Sendeeinheit verstanden, die Strahlung im Bereich von 500 MHz bis 200 GHz abstrahlt. Besonders vorteilhaft ist der Bereich zwischen 20 GHz und 150 GHz. Zum Aussenden des Überwachungsstrahls kann die Sendeeinheit eine Antenne umfassen, z. B. ein metallisches Element, die den Überwachungsstrahl - zweckmäßigerweise mit einer Frequenz außerhalb der thermischen Strahlungsfrequenz - aussendet. Die Frequenz kann von einem Schwingkreis vorgegeben werden. Die Form des Überwachungsstrahls ist frei wählbar und kann gerichtet oder ungerichtet, eindimensional oder beispielsweise als Keule ausgeformt sein. Zweckmäßigerweise ist die Sendeeinheit eine Radarsendeeinheit. Eine solche Einheit kann kompakt und unsichtbar ausgeführt werden und ist unempfindlich gegenüber Schmutz, Umwelteinflüssen und Temperaturschwankungen. Das Strahlumlenkmittel weist vorteilhafter Weise eine hohe Elektrizitätskonstante auf, so dass die Hochfrequenzstrahlung gut reflektiert wird. Zu bevorzugen ist ein metallisches Strahlumlenkmittel, wobei auch andere Materialien denkbar sind, die eine gute Reflexion des Hochfrequenzsignals ermöglichen, z.B. Strahlumlenkmittel mit Wasser oder Flüssigkeiten, Kunststoffe mit einer hohen Dielektrizitätskonstante oder mit beigemengten Substanzen, die eine hohe Dielektrizitätskonstante aufweisen.

Gemäß einer bevorzugten Ausführungsform der Erfindung sind die Sendeeinheit und die Empfangseinheit an einem Modul befestigt. Es kann ein kompaktes und datentechnisch leicht verbindbares System erreicht werden. Die Sendeeinheit weist zweckmäßigerweise eine Sendeantenne und die Empfangseinheit eine Empfangsantenne auf, wobei die Sendeantenne und die Empfangsantenne getrennt angeordnet sein können, wodurch eine besonders empfindliche Signalauswertung ermöglicht wird. Alternativ sind die Sendeantenne und die Empfangsantenne einstückig, also als eine einzige Antenne ausgeführt, wodurch das System besonders kompakt gehalten sein kann.

Vorteilhafterweise umfasst das Hochfrequenzüberwachungssystem ein weiteres Strahlumlenkmittel zur Führung eines von der Sendeeinheit ausgesandten, ungestörten und vom ersten Strahlumlenkmittel umgelenkten Überwachungsstrahls zur Empfangseinheit. Das Überwachungssignal kann in einer Schleife und besonders flexibel in der Strahlführung geführt werden. Ungestört ist der Überwachungsstrahl ohne eine Beeinflussung durch ein zu erfassendes Objekt.

Eine weitere Ausgestaltung des Hochfrequenzüberwachungssystems sieht ein Strahlreflexionsmittel vor zur Reflexion eines von der Sendeeinheit ausgesandten und vom Strahlumlenkmittel umgelenkten Überwachungsstrahls zurück zum Strahlumlenkmittel. Hierdurch kann eine Sackgassenführung des Überwachungsstrahls besonders einfach erreicht werden.

Eine mehrdimensionale Raumüberwachung an einer gewünschten Stelle in einiger Entfernung von der Sendeeinheit kann besonders einfach durch ein Strahlweitemittel zur Aufweitung eines von der Sendeeinheit ausgesandten und vom Strahlumlenkmittel umgelenkten Überwachungsstrahls und zur Aussendung in eine Umgebung erreicht werden. Durch die Ausführung des Strahlweitemittels derart, dass es zur Erzeugung eines im Wesentlichen zweidimensionalen Überwachungsvorhangs vorgesehen ist, kann eine zuverlässige Raumüberwachung mit verhältnismäßig geringer Signalstärke erreicht werden.

Ist das Strahlumlenkmittel zur Mehrfachreflexion des Überwachungsstrahls vorgesehen, kann ebenfalls mit einem verhältnismäßig schwachen Signal eine zuverlässige mehrdimensionale Überwachung erreicht werden. Das Strahlumlenkmittel kann hierfür eine konkave Form, ggf. unterbrochen und mit oder ohne Innenkante, aufweisen. Zweckmäßigerweise ist das Strahlumlenkmittel als zumindest teilweise um einen Raum umlaufender Metallstreifen ausgeführt.

Ein zuverlässig funktionierendes und schwer erkennbares Strahlumlenkmittel kann erreicht werden, wenn das Strahlumlenkmittel eine dielektrische Umlenkschicht aufweist, die von niedrig-dielektrischem, vorzugsweise in der Überwachungsstrecke angeordnetem Material bedeckt ist. Als niedrig-dielektrisches Material wird Material mit einer Dielektrizitätskonstante unterhalb 5 verstanden.

Der Überwachungsstrahl kann durch eine ihn aussendende Antenne fokussiert werden. Eine Aufweitung von etwa einem Grad wird hierbei in der Regel bestehen bleiben. Eine gute Fokussierung des Überwachungsstrahls kann erreicht werden, wenn das Strahlumlenkmittel ein Fokussiermittel zum Fokussieren des Überwachungsstrahls aufweist. Durch die Verbindung des Fokussiermittels mit dem Strahlumlenkmittel kann die Anzahl verwendeter Bauteile gering und der Justageaufwand des Überwachungsstrahls einfach gehalten werden. Das Strahlumlenkmittel und das Fokussiermittel können hierbei identisch sein, beispielsweise, indem das Strahlumlenkmittel gewölbt ausgeführt ist. In einer weiteren Ausführungsform ist das Fokussiermittel als dielektrisch wirksamer Kunststoff ausgeführt, welcher eine elektrische Linse bildet. Auch weitere dielektrisch wirksame Materialien sind möglich. Solches Material bzw. solcher Kunststoff kann außerdem zum Aufweiten des Überwachungsstrahls verwendet werden.

In einer weiteren vorteilhaften Ausgestaltung der Erfindung umfasst das Hochfrequenzüberwachungssystem eine Steuereinheit, die zu einer Lokalisierung eines im Überwachungsstrahl befindlichen Objekts vorgesehen ist. Hierdurch kann nicht nur das Eintreten des Objekts in den Überwachungsstrahl überwacht werden, sondern auch zweckmäßigerweise genau erfasst werden, wo das Objekt in den Überwachungsstrahl eingetreten ist. Außerdem oder alternativ ist die Steuereinheit vorteilhafter Weise zu einer Erfassung einer Geschwindigkeit eines im Überwachungsstrahl befindlichen Objekts vorgesehen. Hierdurch kann eine Identifizierung des Objekts erreicht werden. Die Erfassung von Ort und/oder Geschwindigkeit kann durch die Aussendung von Strahlungspulsen oder amplitudenmodulierter Strahlung und die Messung von deren Laufzeit bestimmt werden. Es ist auch möglich, eine Entfernung des Objekts durch Phasenauswertung zu bestimmen, wobei hierbei eine Mehrfrequenzmessung vorteilhaft ist, um einen großen Phaseneindeutigkeitsbereich verbunden mit einer hohen Messgenauigkeit zu erzielen.

Besonders vorteilhaft ist die Verwendung des wie oben beschriebenen Hochfrequenzüberwachungssystems in einer Vorrichtung mit einem insbesondere beweglichen Werkzeug. Ein Raum um das Werkzeug, von dem beispielsweise ein Gefahrenpotential für einen Bediener ausgeht, kann überwacht und das Werkzeug, beispielsweise eine Säge, abgeschaltet werden, wenn ein Eindringen eines Objekts in den überwachten Raum bestimmte Kriterien erfüllt, das Objekt beispielsweise dem Werkzeug zu nahe kommt. Der Überwachungsstrahl ist zweckmäßigerweise um das Werkzeug herumgeführt, um das Werkzeug von mehreren Seiten überwachen zu können. Hierbei ist eine zumindest teilweise Herumführung um das Werkzeug ausreichend.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: ein Radarüberwachungssystem mit drei um ein Gebäude angeordneten Strahlumlenkmitteln,
- Fig. 2: das Überwachungssystem aus Figur 1 mit einem Objekt in einer Überwachungsstrecke,
- Fig. 3: ein Hochfrequenzüberwachungssystem mit einem Reflexionsmittel,
- Fig. 4: ein Radarüberwachungssystem mit einem Strahlweitemithel zur Überwachung eines dreidimensionalen Raums,
- Fig. 5a - 5c: ein Strahlweitemittel und zwei Fokussiermittel,
- Fig. 6: ein zur Mehrfachreflexion vorgesehenes Strahlumlenkmittel und
- Fig. 7: einen Rasenmäher mit einem Radarüberwachungssystem. Beschreibung der Ausführungsbeispiele

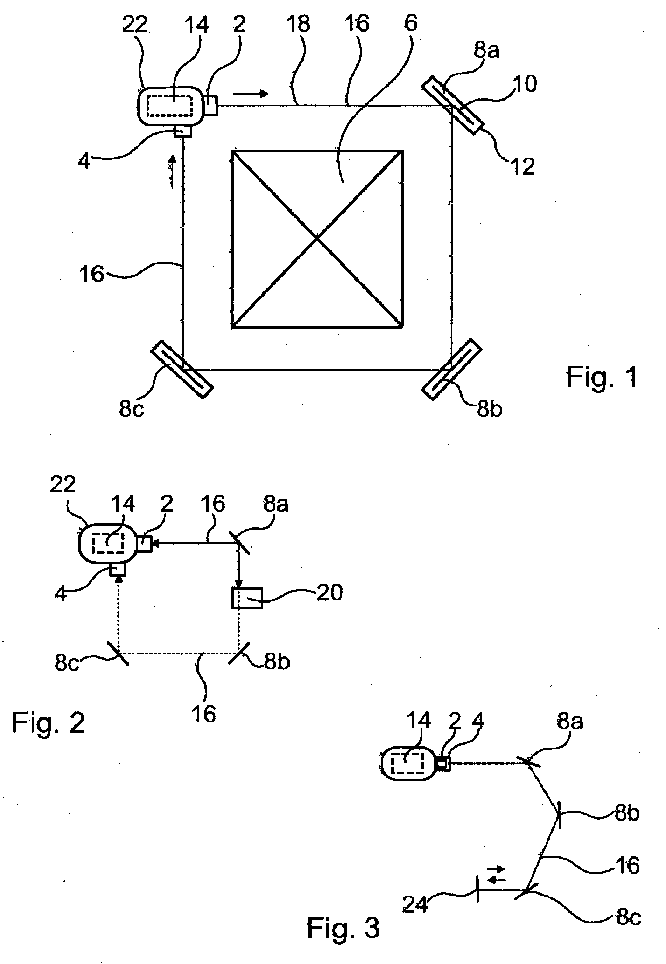

Figur 1 zeigt ein Radarüberwachungssystem mit einer Sendeeinheit 2 zur Aussendung von Radarstrahlung und einer Empfangseinheit 4 zum Empfangen der ausgesandten Radarstrahlung. Das Überwachungssystem ist benachbart zu einem schematisch dargestellten Gebäude 6 angeordnet, um das herum drei Strahlumlenkmittel 8a, 8b, 8c positioniert sind. Jedes der Strahlumlenkmittel 8a-8c umfasst eine metallische Umlenkschicht 10, die von einem niedrig-dielektrischen Material 12 in Form von Kunststoff mit einer Dielektrizitätskonstante Dₖ = 4 umgeben ist. Das Material 12 ist in weitere, nicht dargestellte Objekte integriert, so dass die Strahlumlenkmittel 8a-8c von außen nicht ohne weiteres als solche erkennbar sind. Die Sendeeinheit 2 und die Empfangseinheit 4 weisen jeweils eine nicht dargestellte Antenne zum Senden bzw. Empfangen eines Überwachungsstrahls 16 auf. Beide Antennen sind mit einer Steuereinheit 14 verbunden. Zum Aussenden des Überwachungsstrahls 16 wird die Sendeantenne von der Steuereinheit 14 mit einer Sendefrequenz von 122 G Hz angesteuert, wobei die Ansteuerung frequenzmoduliert oder in Form von Signalpulsen erfolgen kann.

Der Überwachungsstrahl 16 legt von der Sendeeinheit 2 bis zum ersten Strahlumlenkmittel 8a eine erste Überwachungsstrecke 18 durch die das Gebäude 6 umgebende Luft zurück und wird vom ersten Strahlumlenkmittel 8a durch Reflexion auf das zweite Strahlumlenkmittel 8b geleitet. Dort wird es erneut um 90° reflektiert, ebenso durch das dritte Strahlumlenkmittel 8c, und gelangt so nach dem Durchlaufen von vier Überwachungsstrecken 18 zu der Empfangseinheit 4, durch die es in Verbindung mit der Steuereinheit 14 ausgewertet wird.

In Figur 2 ist ein in den Überwachungsstrahl 16 eingedrungenes Objekt 20 gezeigt, durch das der Überwachungsstrahl 16 in seiner Intensität und Phase verändert oder blockiert wird, was durch die Empfangseinheit 4 in Verbindung mit der Steuereinheit 14 registriert wird. Die Steuereinheit 14 gibt daraufhin ein Registriersignal, beispielsweise einen Alarm in Form eines akustischen, optischen oder elektrischen Signals, ab. Durch die Anordnung sowohl der Empfangseinheit 4 als auch der Sendeeinheit 2 an einem gemeinsamen Modul 22, das auch die Steuereinheit 14 beherbergt, kann das gesamte Modul 22 kompakt und in puncto Signalübertragung trotz des weiten und schwierig zu überwachenden Raums einfach ausgeführt sein.

Ein geringer Anteil des Überwachungsstrahls 16 wird von dem Objekt reflektiert und erreicht die Sendeantenne der Sendeeinheit 2. Dieses Signal wird von der Steuereinheit 14 ebenfalls registriert und daraus die Entfernung von der Sendeeinheit 2 über das Strahlumlenkmittel 8a bis zum Objekt 20 berechnet und auf einem in Figur 2 nicht dargestellten Anzeigemittel für Bedienpersonal dargestellt. Durch eine länger andauernde Aussendung des Überwachungsstrahls 16 kann zusätzlich zur Entfernung eine Bewegung des Objekts 20 durch eine sich verändernde Entfernung erkannt werden. In einer alternativen Ausgestaltung bilden die Steuereinheit 14 und die Sendeeinheit 2 ein Dopplerradar, durch das die Geschwindigkeit des Objekts 20 direkt erfasst werden kann.

Das Objekt 20 kann durch eine Amplitudenauswertung des Überwachungssignals 16 als solches erkannt werden. Durch eine zusätzliche Auswertung der Phase des Überwachungssignals 16 kann eine Aussage darüber getroffen werden, ob das Objekt metallisch ist - es erzeugt einen Phasensprung - oder beispielsweise eine Person, die keinen oder einen geringen Phasensprung des Signals erzeugt.

Die Figuren 3, 4, 6 und 7 zeigen alternative Überwachungssysteme, wobei im Wesentlichen gleich bleibende Bauteile grundsätzlich mit den gleichen Bezugszeichen beziffert sind. Bezüglich gleich bleibender Merkmale und Funktionen kann auf die Beschreibung zum Ausführungsbeispiel in den Figuren 1 und 2 verwiesen werden. Die nachfolgende Beschreibung beschränkt sich im Wesentlichen auf die Unterschiede zum Ausführungsbeispiel in den Figuren 1 und 2.

Bei dem in Figur 3 gezeigten, im Mikrowellenbereich arbeitenden Überwachungssystem sind die Sendeeinheit 2 und die Empfangseinheit 4 in einem Bauteil integriert, und die Sendeantenne und Empfangsantenne sind als ein Bauteil ausgeführt. Zusätzlich zu den Strahlumlenkmitteln 8a - 8c umfasst das Überwachungssystem ein Strahlreflexionsmittel 24, das den vom letzten Strahlumlenkmittel 8c kommenden Überwachungsstrahl 16 auf das Strahlumlenkmittel 8c zurück reflektiert und damit zur Empfangseinheit 4 bzw. Sendeeinheit 2 zurückschickt. Durch diese Anordnung ist eine Sackgassenstrahlführung realisiert.

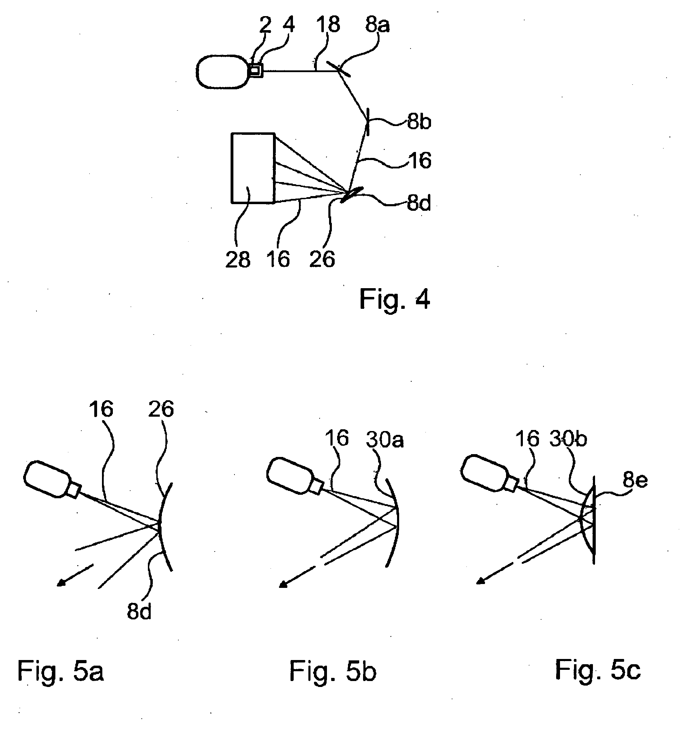

Das in Figur 4 gezeigte Radarüberwachungssystem weist an einem Strahlumlenkmittel 8d ein Strahlweitemittel 26 auf, das den vom Strahlumlenkmittel 8b kommenden Überwachungsstrahl 16 aufweitet, so dass dieser in einen zu überwachenden dreidimensionalen Raum 28 gelenkt wird und diesen im Wesentlichen vollständig ausleuchtet. Auf diese Weise wird die Überwachung eines dreidimensionalen Raums 28 an einem im Wesentlichen beliebig wählbaren Ort erreicht, wobei die Sendeeinheit 2 in einiger Entfernung von diesem Raum 28 angeordnet sein kann. Zusätzlich zu dieser Raumüberwachung wird innerhalb der Überwachungsstrecke 18 zwischen der Sendeeinheit 2 und dem Strahlweitemittel 26 eine Schrankenüberwachung erreicht.

Das Strahlweitemittel 26, das gleichzeitig eine Kombination mit dem Strahlumlenkmittel 8d ist, ist in Figur 5a schematisch dargestellt. Es wird aus einer zweidimensional konvex gebogenen Schicht mit einer hohen Dielektrizitätskonstanten, z. B. einer metallischen Schicht, gebildet, deren Krümmung an die Größe des zu überwachenden Raums 28 angepasst ist. In einer alternativen Ausgestaltung kann das Strahlweitemittel 26 zylindersegmentförmig ausgeführt sein, so dass der auftreffende Überwachungsstrahl nicht dreidimensional, sondern nur zweidimensional aufgefächert wird. Hierdurch kann der Überwachungsstrahl 16 zu einem zweidimensionalen Überwachungsvorhang geformt werden, der besonders geeignet zum "Verschließen" von Eingängen ist.

Analog hierzu ist in Figur 5b ein Fokussiermittel 30a dargestellt, das mit einer konkaven Form zur Fokussierung des Überwachungsstrahls 16 ausgeführt ist. Eine andere Form eines Fokussiermittels 30b ist in Figur 5c gezeigt. Auf einem als metallische Schicht ausgeführten Strahlumlenkmittel 8e ist eine Linse aus einem dielektrisch wirksamen Kunststoff aufgebracht. Der Überwachungsstrahl 16 durchtritt diese Linse sowohl vor seiner Reflexion auf dem Strahlumlenkmittel 8e als auch nach seiner Reflexion und wird in diesem Strahlengang etwas fokussiert.

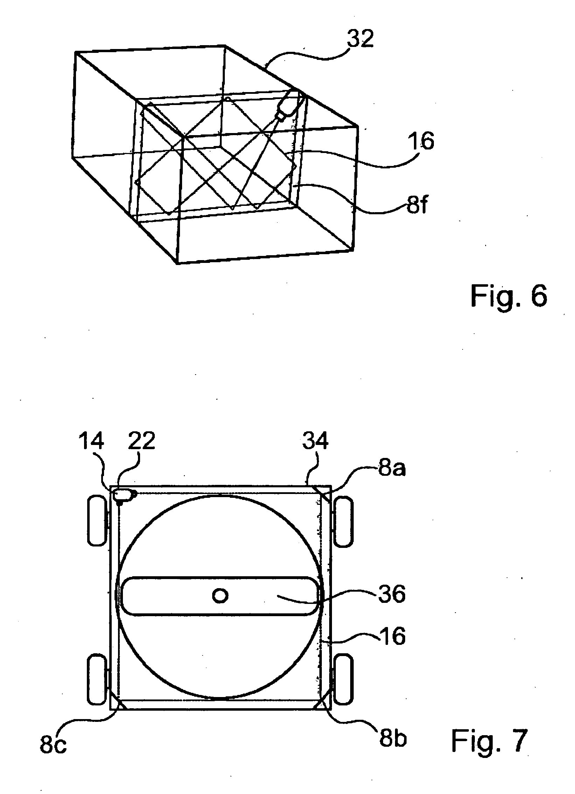

Bei dem in Figur 6 gezeigten Überwachungssystem ist ein Strahlumlenkmittel 8f in Form eines um ein Zimmer 32 umlaufenden Metallbands ausgeführt. Der aufgeweitete Überwachungsstrahl 16 wird von diesem Metallband mehrfach reflektiert und bildet so einen zweidimensionalen Vorhang, der die beiden Zimmerhälften voneinander abteilt. Sobald jemand durch diesen Vorhang tritt, ändert sich das Empfangssignal, was durch die Steuereinheit 14 erkannt wird.

Eine Werkzeugmaschine in Form eines Rasenmähers 34 ist schematisch in Figur 7 gezeigt. Rund um ein Werkzeug 36 in Form eines Messers des Rasenmähers 34 ist der Überwachungsstrahl 16 anhand von drei Strahlumlenkmitteln 8a - 8c geführt. Wird dieser Überwachungsstrahl 16 durch einen Gegenstand, beispielsweise einen Fuß eines Bedieners, unterbrochen, so wird automatisch ein sofortiger Stopp des Messers durch die im Modul 22 angeordnete Steuereinheit 14 veranlasst. Durch das vollständige Herumführen des Überwachungsstrahls 16 um das Messer wird ein weiter gehender Schutz des Bedieners erreicht. Mit gleichem Vorteil kann anstelle des Rasenmähers 34 eine Kreissäge und anstelle des Messers ein Kreissägeblatt überwacht werden.

## Patentansprüche

1. Hochfrequenzüberwachungssystem mit einer Sendeeinheit (2) zum Aussenden und einer Empfangseinheit (4) zum Empfangen eines hochfrequenten Überwachungsstrahls (16), sowie mit einem um zumindest eine Überwachungsstrecke (18) von der Sendeeinheit (2) und der Empfangseinheit (4) entfernt angeordneten Strahlumlenkmittel (8a-f) zum Umlenken des Überwachungsstrahls (16), **dadurch gekennzeichnet, dass** das Strahlumlenkmittel (8a-c) eine dielektrische Umlenkschicht (10) aufweist, die von niedrig-dielektrischem Material (12) mit einer Dielektrizitätskonstante unterhalb 5 bedeckt ist. (16).

2. Hochfrequenzüberwachungssystem nach Anspruch 1, **dadurch gekennzeichnet, dass** die Sendeeinheit (2) und die Empfangseinheit (4) an einem Modul (22) befestigt sind.

3. Hochfrequenzüberwachungssystem nach Anspruch 1 oder 2, **gekennzeichnet durch** ein weiteres Strahlumlenkmittel (8b,c) zur Führung eines von der Sendeeinheit ausgesandten, ungestörten und vom ersten Strahlumlenkmittel (8a,b) umgelenkten Überwachungsstrahls (16) zur Empfangseinheit (4).

4. Hochfrequenzüberwachungssystem nach einem der vorhergehenden Ansprüche, **gekennzeichnet durch** ein Strahlreflexionsmittel (24) zur Reflexion eines von der Sendeeinheit (2) ausgesandten und vom Strahlumlenkmittel (8a-c) umgelenkten Überwachungsstrahls (16) zurück zum Strahlumlenkmittel (8a-c).

5. Hochfrequenzüberwachungssystem nach einem der vorhergehenden Ansprüche, **gekennzeichnet durch** ein Strahlweitemittel (26) zur Aufweitung eines von der Sendeeinheit (2) ausgesandten und vom Strahlumlenkmittel (8a,b) umgelenkten Überwachungsstrahls (16) und zur Aussendung in eine Umgebung.

6. Hochfrequenzüberwachungssystem nach Anspruch 5, **dadurch gekennzeichnet, dass** das Strahlweitemittel (26) zur Erzeugung eines im Wesentlichen zweidimensionalen Überwachungsvorhangs vorgesehen ist.

7. Hochfrequenzüberwachungssystem nach einem der vorhergehenden Ansprüche, **dadurch gekennzeichnet, dass** das Strahlumlenkmittel (8f) zur Mehrfachreflexion des Überwachungsstrahls (16) vorgesehen ist.

8. Hochfrequenzüberwachungssystem nach einem der vorhergehenden Ansprüche, **dadurch gekennzeichnet, dass** das Strahlumlenkmittel ein Fokussiermittel (30a,b) zum Fokussieren des Überwachungsstrahls (16) aufweist.

9. Hochfrequenzüberwachungssystem nach einem der vorhergehenden Ansprüche, **gekennzeichnet durch** eine Steuereinheit (14), die zu einer Lokalisierung eines im Überwachungsstrahl (16) befindlichen Objekts (20) vorgesehen ist.

10. Hochfrequenzüberwachungssystem nach einem der vorhergehenden Ansprüche, **gekennzeichnet durch** eine Steuereinheit (14), die zu einer Erfassung einer Geschwindigkeit eines im Überwachungsstrahl (16) befindlichen Objekts (20) vorgesehen ist.

11. Vorrichtung mit einem Werkzeug (36) und einem Hochfrequenzüberwachungssystem nach einem der vorhergehenden Ansprüche.

12. Vorrichtung nach Anspruch 12, **dadurch gekennzeichnet, dass** der Überwachungsstrahl (16) um das Werkzeug (36) herumgeführt ist.

## Claims

1. Radio-frequency monitoring system having a transmitting unit (2) for transmission and having a receiving unit (4) for reception of a radio-frequency monitoring beam (16), and having a beam deflection means (8a-f), which is arranged at a distance from the transmitting unit (2) and the receiving unit (4) by at least one monitoring path (18), for deflection of the monitoring beam (16), **characterized in that** the beam deflection means (8a-c) has a dielectric deflection layer (10) which is covered by low-dielectric material (12) having a dielectric constant of less than 5 (16).

2. Radio-frequency monitoring system according to Claim 1, **characterized in that** the transmitting unit (2) and the receiving unit (4) are attached to a module (22).

3. Radio-frequency monitoring system according to Claim 1 or 2, **characterized by** a further beam deflection means (8b, c) for guidance of a monitoring beam (16) to the receiving unit (4), which monitoring beam (16) has been transmitted by the transmitting unit, has not been disturbed, and has been deflected by the first beam deflection means (8a, b).

4. Radio-frequency monitoring system according to one of the preceding claims, **characterized by** a beam reflection means (24) for reflection of a monitoring beam (16) back to the beam deflection means (8a-c), which monitoring beam (16) has been transmitted by the transmitting unit (2) and has been deflected by the beam deflection means (8a-c).

5. Radio-frequency monitoring system according to one of the preceding claims, **characterized by** a beam widening means (26) for widening a monitoring beam (16), which has been transmitted by the transmitting unit (2) and has been deflected by the beam deflection means (8a, b), and for transmission into a surrounding area.

6. Radio-frequency monitoring system according Claim 5, **characterized in that** the beam widening means (26) is provided in order to produce an essentially two-dimensional monitoring curtain.

7. Radio-frequency monitoring system according to one of the preceding claims, **characterized in that** the beam deflection means (8f) is provided for multiple reflection of the monitoring beam (16).

8. Radio-frequency monitoring system according to one of the preceding claims, **characterized in that** the beam deflection means has a focusing means (30a, b) for focusing the monitoring beam (16).

9. Radio-frequency monitoring system according to one of the preceding claims, **characterized by** a control unit (14) which is provided in order to locate an object (20) which is located in the monitoring beam (16).

10. Radio-frequency monitoring system according to one of the preceding claims, **characterized by** a control unit (14) which is provided in order to detect the velocity of an object (20) which is located in the monitoring beam (16).

11. Apparatus having a tool (36) and a radio-frequency monitoring system according to one of the preceding claims.

12. Apparatus according to Claim 12, **characterized in that** the monitoring beam (16) is passed around the tool (36).

## Revendications

1. Système de surveillance à haute fréquence doté d'une unité d'émission (2) qui émet un faisceau de surveillance (16) à haute fréquence et d'une unité de réception (4) qui le reçoit, ainsi que de moyens (8a-f) de déviation du rayonnement qui dévient le faisceau de surveillance (16) et qui sont disposés à au moins une distance de surveillance (18) de l'unité d'émission (2) et de l'unité de réception (4),
**caractérisé en ce que**
les moyens (8a-c) de déviation du rayonnement présentent une couche diélectrique de déviation (10) qui est recouverte par un matériau (12) peu diélectrique dont la constante diélectrique est inférieure à 5 (16).

2. Système de surveillance à haute fréquence selon la revendication 1, **caractérisé en ce que** l'unité d'émission (2) et l'unité de réception (4) sont fixées sur un module (22).

3. Système de surveillance à haute fréquence selon les revendications 1 ou 2, **caractérisé par** un autre moyen (8b, c) de déviation du rayonnement qui conduit vers l'unité de réception (4) un faisceau de surveillance (16) non perturbé émis par l'unité d'émission et dévié par le premier moyen (8a,b) de déviation du faisceau.

4. Système de surveillance à haute fréquence selon l'une des revendications précédentes, **caractérisé par** un moyen (24) de réflexion du faisceau qui réfléchit vers le moyen (8a-c) de déviation du faisceau le faisceau de surveillance (16) émis par l'unité d'émission (2) et dévié par le moyen (8a-c) de déviation du faisceau.

5. Système de surveillance à haute fréquence selon l'une des revendications précédentes, **caractérisé par** un moyen (26) d'évasement du faisceau qui évase et émet dans l'environnement un faisceau de surveillance (16) émis par l'unité d'émission (2) et dévié par le moyen (8a, b) de déviation du faisceau.

6. Système de surveillance à haute fréquence selon la revendication 5, **caractérisé en ce que** le moyen (26) d'évasement du faisceau est prévu pour former un rideau de surveillance essentiellement bidimensionnel.

7. Système de surveillance à haute fréquence selon l'une des revendications précédentes, **caractérisé en ce que** le moyen (8f) de déviation du faisceau est prévu pour réfléchir plusieurs fois le faisceau de surveillance (16).

8. Système de surveillance à haute fréquence selon l'une des revendications précédentes, **caractérisé en ce que** le moyen de déviation du faisceau présente un moyen de concentration (30a, b) qui concentre le faisceau de surveillance (16).

9. Système de surveillance à haute fréquence selon l'une des revendications précédentes, **caractérisé par** une unité de commande (14) prévue pour localiser un objet (20) situé dans le faisceau de surveillance (16).

10. Système de surveillance à haute fréquence selon l'une des revendications précédentes, **caractérisé par** une unité de commande (14) prévue pour détecter la vitesse d'un objet (20) situé dans le faisceau de surveillance (16).

11. Dispositif doté d'un outil (36) et d'un système de surveillance à haute fréquence selon l'une des revendications précédentes.

12. Dispositif selon la revendication 12, **caractérisé en ce que** le faisceau de surveillance (16) est guidé autour de l'outil (36).
